# EUROPEAN PATENT APPLICATION

(11) **EP 1 722 505 A1**
(43) Date of publication of application: **15.11.2006**
(21) Application number: 06251233.0
(22) Date of filing: 08.03.2006
(51) Int. Cl.: H04L 12/00

(54) **Control technology for storage system**

(30) Priority: 24.03.2005 JP 2005086605
(71) Applicant: Hitachi, Ltd., Tokyo (JP)
(72) Inventor: Nonaka, Yusuke, Hitachi, Ltd. IP Group, Chiyoda-ku Tokyo 100-8220 (JP)
(74) Representative: Hodsdon, Stephen James

(57) **Abstract**

A storage system (10) is connected to a first computer (40) that has a file system to convert between file data and block data. The file data is data that is identified in file units, and the block data is data that is identified in block units. This storage system comprises a first interface (130), a storage device (300), a type identification module (226), and a data conversion module (227). The first interface is a interface for sending and receiving the block data with the first computer. The storage device has a first storage area (GS) for storing the block data that is sent and received via the first interface. The type identification module is a module that identifies the type of the file system that is available in the first computer. And the data conversion module that acquires the block data stored in the first storage area, and executes a conversion process to convert the acquired block data into the file data according to the identified type of the file system.

## Description

The present invention relates to control of a storage system, and in particular but not exclusively relates to management of file data in a storage system.

As the amount of data handled by computers has increased, computer systems that manage computer data intensively in a storage system connected via a network have become increasingly widespread. As computer systems of this kind, the following two types of systems are known, distinguished from one another by the format of data transmission between the storage system and the computer, wherein the computer sends and receives data stored in the storage system (hereinafter termed the host computer). The first of these is one having a file system on the host computer side, with data communication between the storage system and the host computer taking place in block units; the other has a file system on the storage system, with data communication between the storage system and the host computer taking place in file units. Typically, the former is called an SAN (Storage Area Network) and the latter is called NAS (Network Attached Storage).

In recent years, with the object of achieving more flexible system configurations and reducing total cost of ownership (TCO), there has been proposes a storage system that supports both data communication in block units and data communication in file units in a single storage system, known as an SAN/NAS hybrid storage system.

However, in the conventional technology described above, there was the problem that a storage system in isolation may not manage data in file units, wherein the data has been received in block unit data transmission from the host computer (hereinafter termed SAN data). That is, in order for a storage system to recognize SAN data in file units, it was necessary to initially transmit SAN data by block unit data transmission from the storage system to the host computer, to then convert the SAN data into file unit data in the host computer, and finally to send the converted data by file unit data transmission from the host computer to the storage system. This approach poses the risk, for example, of increasing the load on the host computer and on the network, hindering efficient data management.

This problem is not limited to the SAN/NAS hybrid storage system, but rather is a problem common to instances in which SAN data is managed in file units, for example, in instances where all data is managed in file units in unified fashion, in a system includes one SAN storage and another NAS storage.

An object of the present invention is to efficiently manage SAN data in file units, in a storage system that stores SAN data.

To preferably address the above-mentioned problem at least in part, a first aspect of the invention provides a storage system connected to a first computer that has a file system to convert between file data and block data. The file data is data that is identified in file units, and the block data is data that is identified in block units. This storage system comprises a first interface, a storage device, a type identification module, and a data conversion module. The first interface is a interface for sending and receiving the block data with the first computer. The storage device has a first storage area for storing the block data that is sent and received via the first interface. The type identification module is a module that identifies the type of the file system that is available in the first computer. And the data conversion module that acquires the block data stored in the first storage area, and executes a conversion process to convert the acquired block data into the file data according to the identified type of the file system.

According to the storage system of the first aspect of the invention, the type of file system that is available in the first computer can be identified, and the block data can be converted to file data according to the identified type of file system, whereby the storage system in isolation can recognize the block data stored in the first storage area in file units. As a result, the load on the first computer and on the network connected to the first computer can be reduced, and efficient management of data in file units can be achieved.

The storage system of the first aspect of the invention may further comprise a second interface for sending and receiving the file data with a second computer. The data conversion module may further execute conversion between the block data and the file data, the file data being sent and received via the second interface. And the storage device may additionally have a third storage area for storing the block data. The block data stored in the third storage area is obtained by the conversion of the file data by the data conversion module. That is, the storage system may be a so-called SAN/NAS hybrid storage system that includes a first interface that is sent and received the block data and a second interface that is sent and received file data. In this case, the storage system in isolation can manage both data stored in the first storage area and data stored in the third storage area in integrated fashion in file units.

A second aspect of the present invention provides an administrative computer for administering a storage system. The storage system has a first interface and a storage device. The first interface sends and receives block data that is identified in block units. The storage device has a first storage area for storing the block data that is sent and received via the first interface. This administrative computer comprises a type reporting module for reporting to the storage system a type of file system in a first computer connected to the storage system. The file system executes conversion between the block data and file data. The block data has been stored in the first storage area, and the file data is identified in file units.

According to the administrative computer of the second aspect of the invention, the type of file system that is available in the first computer can be reported to the storage system, whereby the storage system can interpret in file units the block data stored in the first storage system, according to the reported type of file system.

The present invention can be realized in various aspects, for example, a computer system including the storage system and the first computer of the aforementioned aspect, or a storage system control method. The invention can also be realized as a computer program used to realize functions of this control method, functions of the storage system, functions of the administrative computer, for example, a storage system control program, a backup program for executing backups in file units, or a migration program for executing data migration in file units; as a recording medium having such a computer program recorded thereon; as data signals in which such a computer program is realized in a carrier wave; or various other embodiments.

The above and other objects, characterizing features, aspects and advantages of the present invention will be clear from the description of preferred embodiments presented below along with the attached figures.

### BRIEF DESCRIPTION OF THE DRAWINGS

FIG. 1 is a schematic of arrangement of the computer system in the embodiment;
FIG. 2 is a block diagram showing the internal arrangement of memory of the first computer in the embodiment;
FIG. 3 is a block diagram showing the internal arrangement of memory of the first controller in the embodiment;
FIG. 4 is a block diagram showing the internal arrangement of memory of the second computer in the embodiment;
FIG. 5 is a block diagram showing the internal arrangement of memory of the second controller in the embodiment;
FIG. 6 is a block diagram showing the internal arrangement of part of the storage area of the storage device in the storage system;
FIG. 7 is a block diagram showing the internal arrangement of memory of the administrative computer in the embodiment;
FIG. 8 is an illustration of an example of the arrangement of a storage area recognized by the first computer;
FIG. 9 is an illustration of an example of the logical unit management table;
FIG. 10 is an illustration of an example of the logical volume management table;
FIG. 11 is an illustration giving an overview of the data conversion process for data stored in the SAN storage area;
FIG. 12 is a flowchart showing the processing routine of the backup process;
FIG. 13 is a first flowchart showing the processing routine of the mounting process of a target partition;
FIG. 14 is a second flowchart showing the processing routine of the mounting process of a target partition;
FIG. 15 is a flowchart showing the processing routine of the migration process in Variation 1; and
FIG. 16 is a schematic of arrangement of the computer system in Variation 2.

### A. Embodiment:

### A-1. Arrangement of Computer System

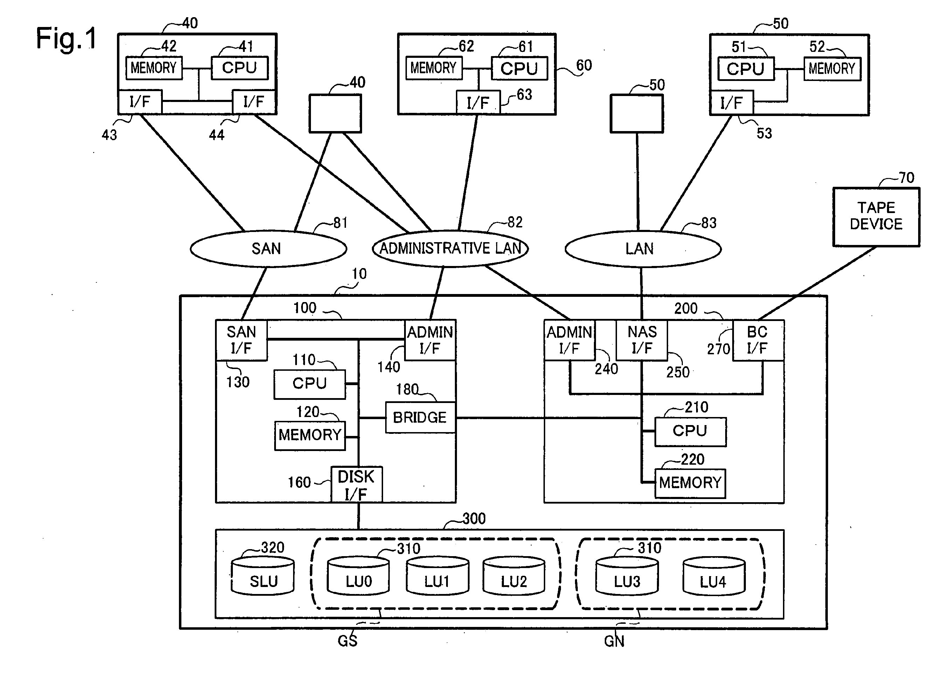

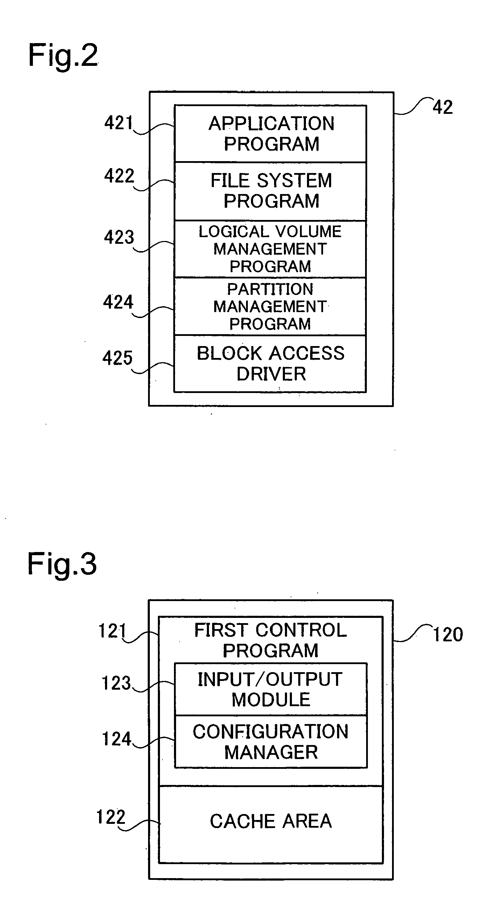

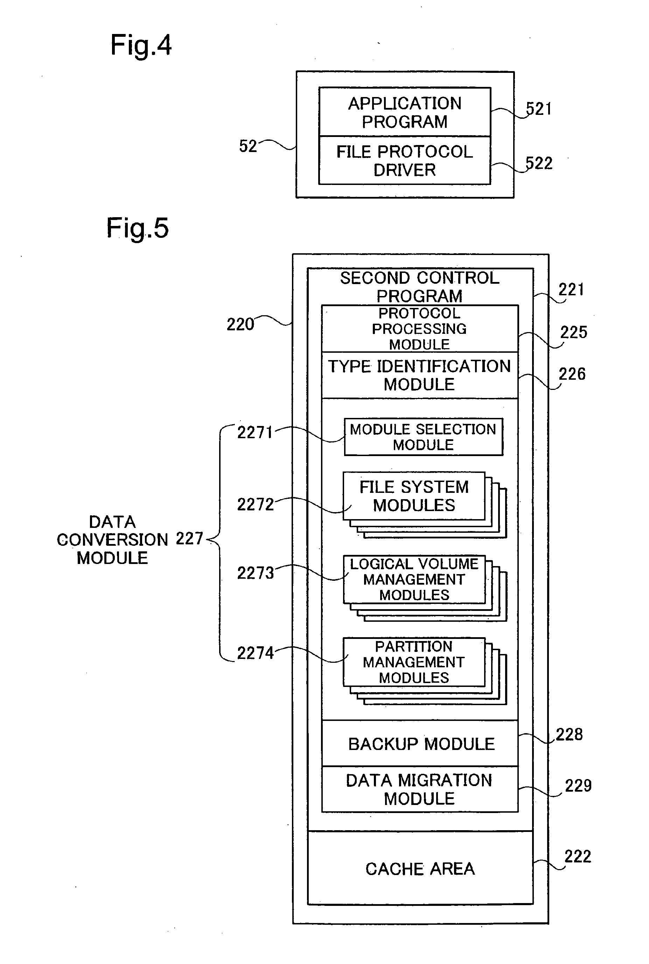

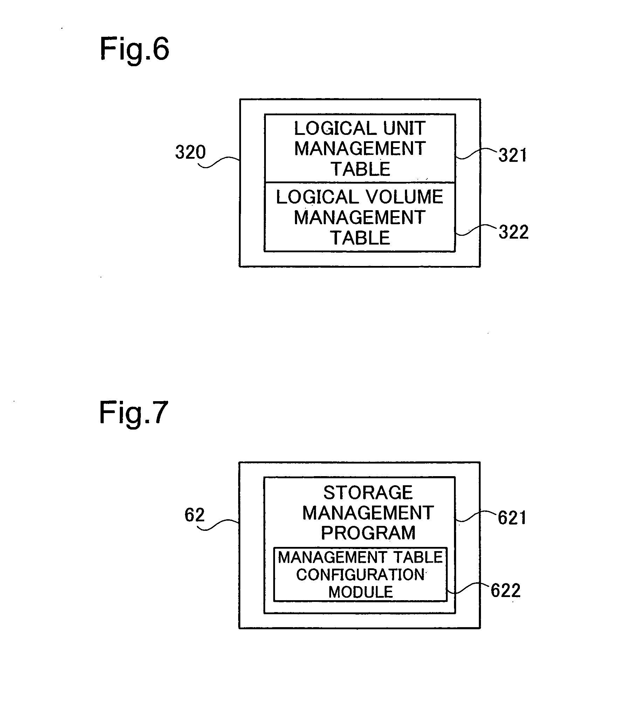

The following description of the arrangement of a computer system that includes the storage system pertaining to embodiment makes reference to FIGS. 1-7. FIG. 1 is a schematic of arrangement of the computer system in the embodiment. FIGS. 2-5 and FIG.7 are block diagrams respectively showing the internal arrangements of memory in the first computer (FIG. 2) and the second computer (FIG. 4) in the embodiment; in the first controller (FIG. 3) and the second controller (FIG. 5) in the storage system; and in the administrative computer (FIG. 7). FIG. 6 is a block diagram showing the internal arrangement of part of the storage area of the storage device 300 in the storage system 10.

The computer system shown in FIG. 1 includes a storage system 10, a first computer 40, a second computer 50, an administrative computer 60, and a tape device 70. In FIG. 1, the first computer 40, the second computer 50, and the tape device 70 may be one or more in number.

The storage system 10 and the first computer 40 are connected via a SAN 81. The SAN 81 is a network (FC-SAN) that carries out data communications using the Fibre Channel protocol, which is a transfer protocol for the block data. Here, "the block data" is used to refers to data recognized in block units. An IP network that carries out data communications using the iSCSI protocol (IP-SAN), for example, could be used instead.

The storage system 10 and the second computer 50 are connected via a LAN 83. The LAN 83 is an ordinary IP network. Through the LAN 83 the storage system 10 and the second computer 50 can carry out data communications using the NFS (Network File System) or CIFS (Common Internet File System), which are transfer protocols for file data. Here, "the block data" is used to refers to data recognized in file units.

The administrative computer 60, the storage system 10, and the first computer 40 are interconnected via an administrative LAN 82. The administrative LAN 82 can assume any of various networking methods for carrying out exchange of administrative information, for example, an ordinary IP network.

The first computer 40 includes a central processing unit (CPU) 41, memory 42, an interface (I/F) 43 for connecting to the storage system 10, and an I/F 44 for connected to the administrative computer 60. As shown in FIG. 2, memory 42 stores an application program 421, a file system program 422, a logical volume management program 423, a partition management program 424, and a block access driver 425. The block access driver 425 is a program for sending/receiving data in block units with the storage system 10 exchanging write/read requests and responses (write/read processes will be described later).

The second computer 50 includes a CPU 51, memory 52, and an I/F 53 for connecting to the storage system 10. As shown in FIG. 4, memory 52 stores an application program 521 and a file protocol driver 522. The file protocol driver 522 is a program for sending/receiving data in file units with the storage system 10 exchanging write/read requests and responses (write/read processes will be described later).

The storage system 10 is a device for storing data sent from the first computer 40 and the second computer 50. The storage system 10 includes a first controller 100, a second controller 200, and a storage device 300.

The first controller 100 is a controller that principally executes input/output control of the block data. The first controller 100 includes a CPU 110, memory 120, an I/F (hereinafter SAN I/F) 130 for connection to the first computer 40, an I/F (hereinafter ADMIN I/F) 140 for connection to the administrative computer 60, a disk I/F (hereinafter DISK I/F) 160 for connection to the storage device 300, and a bridge 180 for connection to the second controller 200. As shown in FIG. 3, memory 120 stores a first control program 121 for realizing the control functions of the first controller 100. Memory 120 also assures a cache area 122 as temporary memory of various kinds of data (e.g. data received from the first computer 40, or data read from the storage device 300). The first control program 121 includes a input/output module 123 for controlling input and output of the block data, and a configuration manager 124 for managing the configuration of the logical units configured in the storage device 300.

The second controller 200 is a controller that principally executes input/output control of file data. The second controller 200 includes a CPU 210, memory 220, an I/F (hereinafter NASI I/F) 250 for connection to the second computer 50, an I/F (hereinafter ADMIN I/F) 240 for connection to the administrative computer 60, and an I/F (hereinafter BC I/F) 270 for connection to the tape device 70. The second controller 200 is connected to the bridge 180 of the first controller 100, enabling sending/receiving of data of various kinds (e.g. block data, command) with the first controller 100. As shown in FIG. 5, memory 220 stores a second control program 221 for realizing the control functions of the second controller 200. Like the memory 120 of the first controller 120, memory 220 assures a cache area 222. The second control program 221 includes a protocol processing module 225, a type identification module 226, a data conversion module 227, a backup module 228, and a data migration module 229. The protocol processing module 225 interprets the file transfer protocol (e.g. NFS, CIFS). The type identification module 226 identifies the type of file system program 422, logical volume management program 423, and partition management program 424 that are available in the first computer 40. The data conversion module 227 principally executes conversion processes between file data and block data (hereinafter termed data conversion process). The backup module 228 backs up in file units the data stored in the storage device 300. The data migration module 229 migrates data stored in one storage area of the storage device 300 to another storage area, in file units.

The data conversion module 227 includes a module selection module 2271, a plurality of different types of file system modules 2272, a plurality of different types of logical volume management modules 2273, and a plurality of different types of partition management modules 2274. The module selection module 2271 arbitrarily selects from among the aforementioned module group a module for use in the data conversion process.

The storage device 300 includes a multitude of disk devices, not shown. These disk devices provide the physical storage areas where the block data is actually stored. These disk devices store the block data and output the stored block data in nature, according to the control of the first controller 100. Physical storage areas in disk devices are associated with logical storage areas by the first controller 100. FIG. 1 shows the arrangement of logical storage areas recognized by the first controller 100. As shown in FIG. 1, the first controller 100 manages the logical storage area in the storage device 300 by dividing it into logical storage areas termed logical units (LU). Each logical unit is treated as an independent storage area, and is managed by means of an independent logical block address. As shown in FIG. 1, in the storage device 300 there are configured a special logical unit SLU storing various kinds of control information, and logical units LU0 -LU4 assigned to the first computer 40 and the second computer 50. LUn denotes a logical unit of logical unit number (LUN) n. In FIG. 1, the group of logical units indicated by the symbol GS is the logical unit group assigned to the first computer 40 (hereinafter termed SAN storage areas); that indicated by the symbol GN is the logical unit group assigned to the second computer 50 (hereinafter termed NAS storage areas). The special logical unit SLU stores information of various kinds for use in administration/control of the storage system 10. As shown in FIG. 6, this information of various kinds includes a logical unit management table 321 and a logical volume management table 322. These kinds of information may be stored in distributed fashion in a multitude of disk devices in the storage device 300, rather than in the special logical unit SLU.

The administrative computer 60 is a terminal that allows a user of the computer system to administer the computer system. The administrative computer 60 is an ordinary computer (e.g. a commercially available notebook computer), and includes a CPU 61, memory 62, and a LAN I/F 63. As shown in FIG. 7, a storage management program 621 is stored in memory 62. The storage management program 621 includes a management table configuration module 622 that configures the logical unit management table 321 and the logical volume management table 322 in the storage system 10.

The tape device 70 is connected to the storage system 10 via the BC I/F 270 of the second controller 200. The tape device 70 is used to store on tape media backup data of the data stored in the storage system 10.

### A-2. Management of Logical Units in First Computer 40:

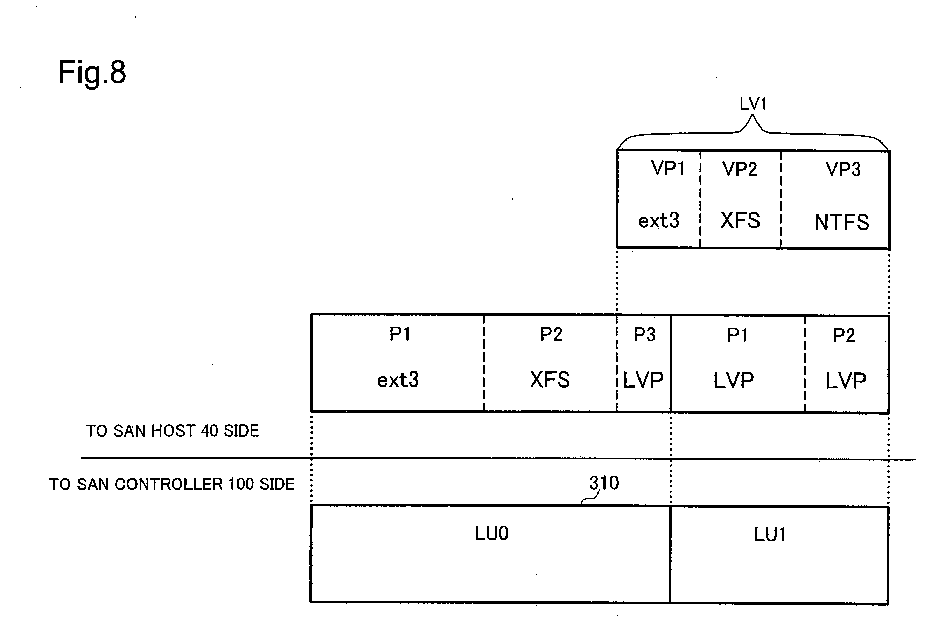

The following description of a storage area recognized by the first computer 40 makes reference to FIG. 8. FIG. 8 is an illustration of an example of the arrangement of a storage area recognized by the first computer 40. The storage system 10 assigns a part of the collection of the logical units to the first computer 40, in units of logical units. Logical units assigned to the first computer 40 are the SAN storage areas mentioned previously. The first computer 40 uses the assigned logical units in order to store data managed by the first computer 40. FIG. 8 shows an example in which two logical units, LU0 and LU1, are assigned to a first computer 40. Assignment of logical units is carried out by the configuration manager 124 of the first control program 121.

The first computer 40, using the partition management program 424, can divide the assigned logical unit to configure a plurality of partitions. In the example shown in FIG. 8, three partitions P1 --P3 are configured in logical unit LU0, and two partitions P1 -P2 are configured in logical unit LU2. Pn denotes a partition of partition No. n configured in a logical unit. The type of partition management program 424 will typically be determined by the specifications of the OS (operating system), or determined by the hardware configuration (hereinafter termed architecture). Accordingly, the type of partition management program 424 is identified by identifying the type of OS or the type of architecture.

The first computer 40, using the logical volume management program 423, can additionally integrate partitions configured on logical units to manage them as a single logical volume. In the example shown in FIG. 8, the first computer 40 has integrated partition P3 of logical unit LU0 and partitions P1 and P2 of logical unit LU1 to configure a logical volume LV1. LVn denotes a logical volume of logical volume No. n. There are multiple types of logical volume management program 423; known types include LVM, VxVM, and Windows Disk ADM (Windows is a registered trademark), for example.

The first computer 40, using the logical volume management program 423, can additionally further divide a logical volume to configure a plurality of partitions. In the example shown in FIG. 8, the first computer 40 divides logical volume LV1 into three to configure partitions VP1 -VP3. VPn denotes a partition of partition No. n configured on a logical volume. Hereinbelow, in order to distinguish between the two types of partition, partition configured on logical unit will be referred to as unit partition, and partition configured on logical volume will be referred to as volume partition. Unit partitions, logical volumes, and volume partitions are logical storage areas managed under independent logical block addresses. Correspondence relationships among logical block addresses of a lower level logical storage area and an upper level logical storage area are managed by the program that configured the upper level logical storage area. A lower level logical storage area and an upper level logical storage area are, for example, a unit partition and a logical volume configured on a unit partition, or a logical volume and a volume partition configured on a logical volume. Accordingly, in order to recognize that data stored at one logical block address of a volume partition is data ultimately stored at one logical block address of a logical unit, both the partition management program 424 and the logical volume management program 423 are needed. Note that the 'first divided storage area' in the claims is equivalent to the 'unit partition' in the embodiment, and the 'the second storage area' in the claims is equivalent to the 'logical volume' in the embodiment, and the 'second divided storage area' in the claims is equivalent to the 'volume partition' in the embodiment.

For each logical storage area configured in the highest level, the first computer 40 configures the file system program 422 for managing the logical storage area. In the example shown in FIG. 8, unit partitions P1 and P2 on logical unit LU0 and volume partitions VP1 -VP3 on logical volume LV1 are the highest level logical storage areas. There are several types of file system program 422. A large number of types of file system program 422 termed, for example, "ext2", "ext3", "XFS", and "NTFS" are known. The first computer 40 may include a single type of file system program 422, or include multiple types of file system program 422; just a kind of the file system program 422 can be configured on a highest level storage area. In FIG. 8, there are shown types of the file system program 422 that manage logical storage areas, for each highest level logical storage area. In FIG. 8, unit partitions denoted as "LVP" indicate those on which a logical volume configured.

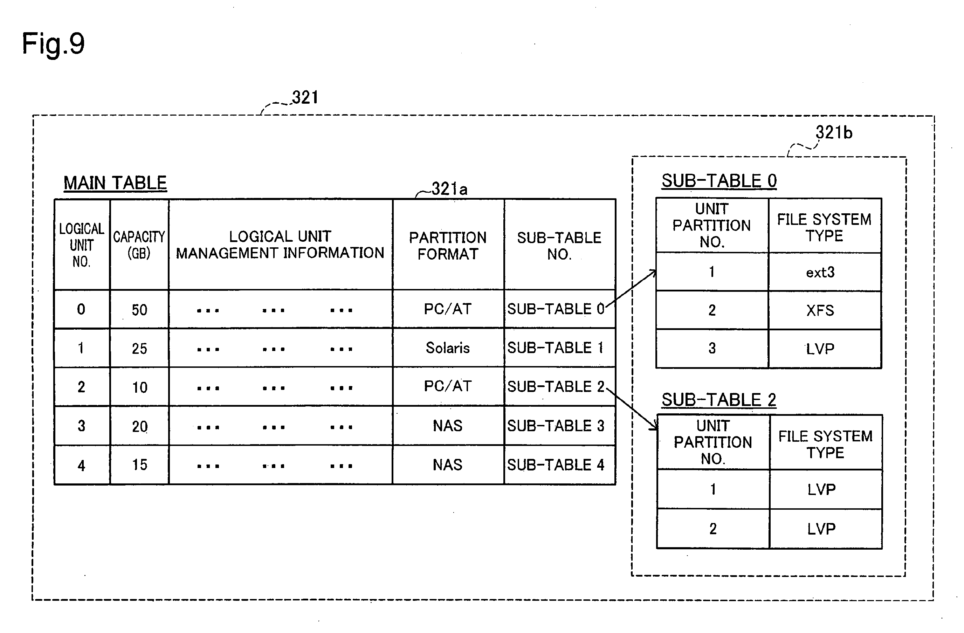

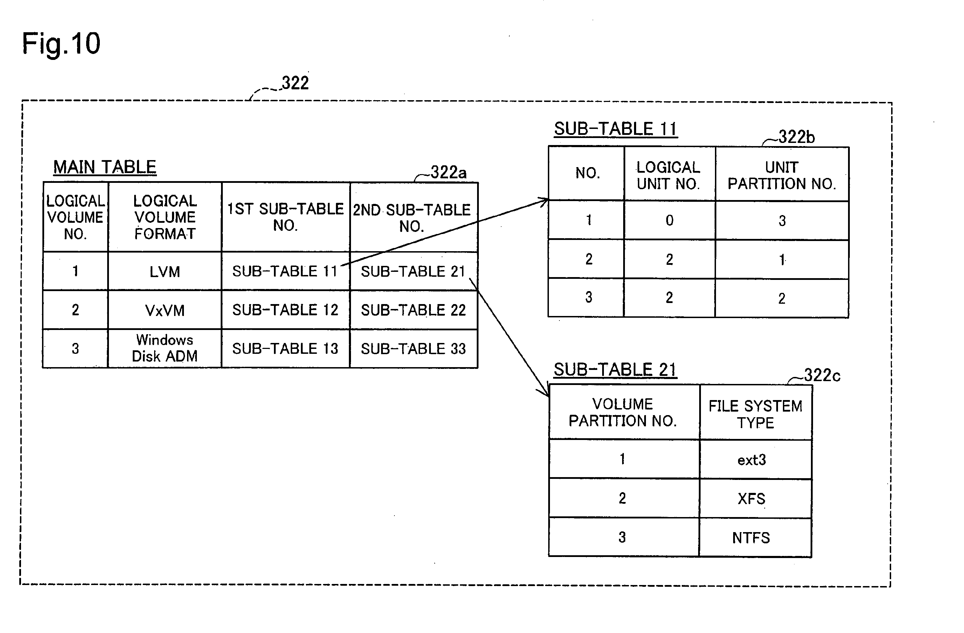

Following is a description of the aforementioned logical unit management table 321 and logical volume management table 322 with reference to FIG. 9 and FIG. 10. FIG. 9 is an illustration of an example of the logical unit management table 321. FIG. 10 is an illustration of an example of the logical volume management table 322. The tables 321, 322 depicted in FIG. 9 and FIG. 10 correspond to the arrangement of logical storage areas in the first computer 40 shown in FIG. 8. The tables 321, 322 are stored in logical unit SLU of the storage system 10 by the administrative computer 60. The administrative computer 60, using the management table configuration module 622 of the storage management program 621, stores these tables 321, 322 in logical unit SLU. As will be understood from the preceding description, the 'type information configuration module' in the claims is equivalent to the 'management table configuration module 622' in the embodiment. To describe briefly, the logical unit management table 321 and the logical volume management table 322 are tables in which are recorded the partition format, logical volume format, and file system types, associated with the arrangement of logical storage areas in the first computer 40.

The logical unit management table 321 is a table recording information relating to logical unit configured in the storage device 300, and includes a main table 321a and a sub-table 321b. Items recorded in the main table 321a include, on a per-logical unit basis, logical unit number, capacity, logical unit management information, unit partition format, and sub-table number. Logical unit management information includes, for example, correspondence relationships among logical units and disk devices (e.g. information specifying a RAID configuration).

The item of the unit partition format represents the format to configure the unit partitions on logical units in the first computer 40; specifically, the type of partition management program 424 is recorded. As noted previously, since the type of partition management program 424 is typically determined by the type of OS or architecture, the name of the OS installed on the first computer 40 or the name of the architecture is recorded in the item of the unit partition format (see FIG. 9: in FIG. 9, Solaris is a registered trademark). The item of unit partition format is recorded, for example, by the administrative computer 60 when logical units are assigned to the host computer (e.g. the first computer 40 or the second computer 50). Sub-table number indicates numbers of sub-tables 321b created on a per-logical unit basis. Items recorded in sub-tables 321b are an item identifying the unit partition configured in a logical unit, and the type of file system configured in the unit partition. For a unit partition on which logical volume is configured, "LVP" is recorded in the item for file system type. The item of file system type is recorded, for example, by the administrative computer 60 when the first computer 40 configures the file system on a unit partition.

The logical volume management table 322 is a table that records information relating to logical volumes configured in the first computer 40. The logical volume management table 322 includes a main table 322a, a first sub-table 322b, and a second sub-table 322c. The main table 322a includes on a per-logical volume basis, the items of logical volume number, logical volume format, first sub-table number, and second sub-table number. The logical volume format represents the format used in the first computer 40 for integrating unit partitions to configure a logical volume and the format for configuration the volume partitions on logical volume. Specifically, as the logical volume format is recorded the type of logical volume management program 423, e.g. the aforementioned "LVM" or "VxVM.". In the first and second sub-table number are numbers for identifying the first and second sub-tables 322b, 322c created on a per-logical volume basis. The first sub-table 322b is list of unit partitions that make up a logical volume; items recorded therein represent information identifying the unit partitions making up the logical volume, specifically, the logical unit number and unit partition number. Items recorded in the second sub-table 322c are information identifying volume partitions configured in a logical volume, and file system type configured in the volume partition. The items of logical volume format and file system type are recorded, for example, when the file systems are configured in the volume partitions in the first computer 40.

### A-3. Operation of Computer System

The description now turns to data write/read operations in the computer system outlined above. First, as a specific example of writing to a file managed on the aforementioned volume partition VP1, there will be described a write operation from the first computer 40 to the SAN storage area GS of the storage system 10. The application program 421 of the first computer 40 carries out writing/reading of data in file units. In the event that file data is to be written, the application program 421 identifies the file targeted for writing by means of a file identifier to identify the file (e.g. directory name and file name), and issues a write request with the file identifier. The first computer converts the file unit write request and file data to be written into a block unit write request and block data. This conversion is executed using the file system program 422, the logical volume management program 423, and the partition management program 424.

To describe in more specific terms, from the issued file identifier, the file system program 422 recognizes the file targeted for writing, and identifies the logical block address of the logical storage area, wherein the logical block address is associated with the file. The logical block address identified by the file system program 422 is a logical block address of the highest level storage area on which the file system program 422 is configured; in this specific example, it is the logical block address of the volume partition VP1. The file system program 422 then converts the file date for writing, into block data associated with the identified logical block address.

The logical volume management program 423 converts the identified logical block address of the volume partition VP1 into a logical block address of a unit partition, in accordance with the correspondence relationship of volume partition VP1 and logical volume LV1, and the correspondence relationship of logical volume LV1 and the unit partition.

The partition management program 424 converts the converted logical block address of the unit partition to the logical block address of a logical unit. As a result, the block data that is identifiable by the first controller 100 of the storage system 10, i.e. block data associated with the logical block address of a logical unit, is created. In other words, file data that the application program 421 has requested to be written is converted to block data that will transfer to the first controller 100 of the storage system 10 using the file system program 422, the logical volume management program 423, and the partition management program 424,

The block access driver 425 issues to the storage system 10 the aforementioned block data associated with the logical block address of logical unit, together with a block data write request. The issued block data and write request are transferred via the SAN 81 to the first controller 100 of the storage system 10. In the first controller 100, when the input/output module 123 receives the block data and write request via the SAN I/F 130, in accordance with the logical block address of the logical unit associated with the received block data, the first controller 100 identifies the physical block address of the disk device in which the block data is to be stored. The input/output module 123 transfers the block data to the storage device 300 and stores the block data in a disk device according to the identified physical block address.

Following is a brief description of the operation of reading data from the SAN storage area GS of the storage system 10 by the first computer 40. When file data is to be read, the application program 421 of the first computer 40 identifies a file to be read by means of a file identifier, and issues a read request with file identifier. Using the file system program 422, the first computer 40 converts the read request for file data into a read request for block data associated with the logical block address of a logical storage area on which the file system program 422 is configured. Using the logical volume management program 423 and the partition management program 424, the first computer 40 converts the logical block address of the logical storage area on which the file system program 422 is configured, into the logical block address of a logical unit. Using the block access driver 425, the first computer 40 transfers the read request of block data associated with the logical block address of the logical unit, to the first controller 100 of the storage system 10. Using the input/output module 123, the first controller 100 identifies the physical block address corresponding to the logical block address of the logical unit, and reads from a disk device of the storage device 300 the block data corresponding to the identified physical block address. Using the input/output module 123, the first controller 100 associates the read block data with the logical block address of the logical unit, and transfers it to the first computer 40, by way of the response to the read request. Using the block access driver 425, the first computer 40 receives the response. Using the logical volume management program 423 and the partition management program 424, the first computer 40 converts the logical block address of the logical unit associated with the block data into the logical block address of a logical storage area configured by the file system program 422. Using the file system program 422, the first computer 40 converts the block data associated with the logical block address of a logical storage area on which the file system program 422 is configured, into file data associated with the file identifier. The application program 421 receives the file data associated with the file identifier, as the response to the file data read request.

Next, a write operation from the second computer 50 to the NAS storage area GN of the storage system 10 will be described in brief. Like the application program 421 of the first computer 40, the application program 521 of the second computer 50 performs writing/reading of data in file units. The application program 521 issues a file data write request. The file protocol driver 522 converts the file data write request issued by the application program 521 and the file data to be written, into a write request and file data formatted with a predetermined file transfer protocol (e.g. CIFS or NIS). The file protocol driver 522 transfers the converted write request and file data to the second controller 200 of the storage system 10 via the LAN 83.

Once the second controller 200 receives in file transfer protocol the write request and file data to be written, the second controller 200 uses the protocol processing module 225 to recognize the write request and file data to be written. Using the data conversion module 227, the second controller 200 converts the file unit write request and file data to be written into a block unit write request and block data. The file system module 2272, logical volume management module 2273, and partition management module 2274 in the data conversion module 227 have functions similar to the file system program 422, logical volume management program 423, and partition management program 424 in the first computer 40 described previously. The second controller 200 transfers the block unit write request and block data to the first controller 100 of the first computer 40 via the bridge 180. Having received the block data and write request from the first controller 100, the first controller 100 executes a process similar to the aforementioned process which it executes when it has received the block data and a write request from the first computer 40, to store the block data in a disk device of the storage device 300.

Next, a read operation by the second computer 50 from the NAS storage area GN of the storage system 10 will be described in brief. First, when file data is to be read, the application program 521 of the second computer 50, like the application program 421 of the first computer 40, identifies by means of a file identifier the file targeted for reading, and issues a read request. The file protocol driver 522 transfers the issued read request to the second controller 200 using the file transfer protocol, in the same way as a write request. When the second controller 200 receives the read request, it uses the protocol processing module 225 to interpret the read request. Using the data conversion module 227, the second controller 200 converts the file unit write request into a read request for block data associated with the logical block address of a logical unit. The second controller 200 transfers the block data read request to the first controller 100 of the storage system 10. The first controller 100, by means of a process similar to the process for a read request received from the first computer 40 described previously, reads the block data from the storage device 300 and transfers it to the second controller 200. The second controller 200 converts the received block data into file data using the data conversion module 227. The second controller 200, using the protocol processing module 225, transfers the file data to the second computer 50. Here, the data conversion module 227 of the second controller 200 has a file system module specific to the storage system 10 (hereinafter termed dedicated file system module), as one of the plurality different types of selectable file system modules 2272. The dedicated file system module is a file system that is designed to specialize only in NAS functionality of the storage system 10, making processes more efficient. In the write/read processes about the NAS storage area GN described earlier, the second controller 200 uses the dedicated file system module in conversion processes of file data and block data. By so doing NAS functionality of the storage system 10 can be improved.

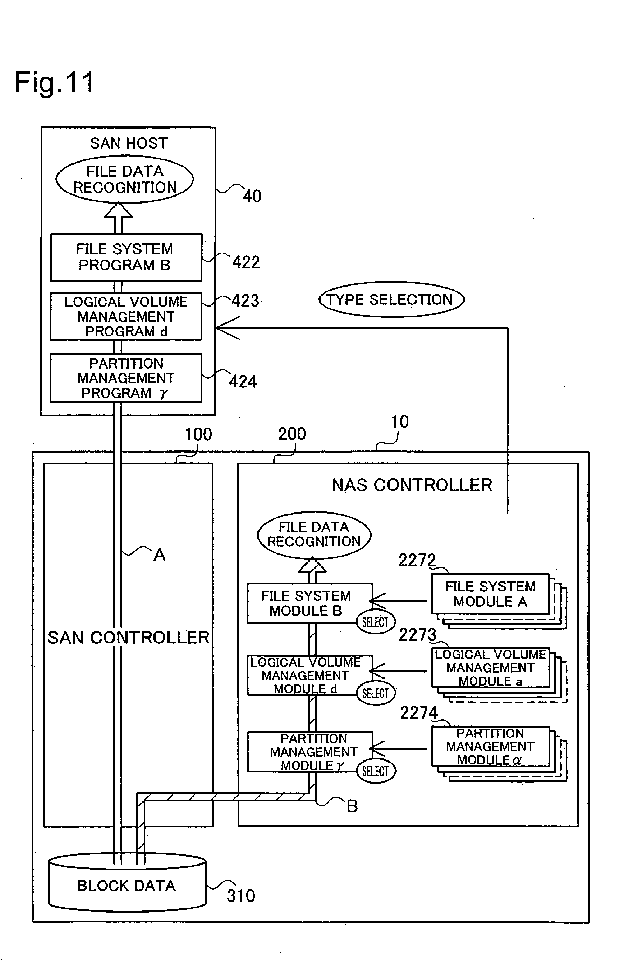

As will be apparent from the preceding description, in the process of writing/reading data stored in the SAN storage area GS, the block data input/output process is executed on the storage system 10, whereas conversion between the block data and file data (hereinafter termed data conversion process) is executed on the first computer 40. On the other hand, in process of writing/reading data stored in the NAS storage area GN, the block data input/output process and data conversion process are both executed on the storage system 10. The storage system 10 in the embodiment is furnished a function for executing the data conversion process on the storage system 10, even for data stored in the SAN storage area GS, for the purpose of the backup process and data migration process described later. A description of the general outline of the function follows, with reference to FIG. 11. FIG. 11 is an illustration giving an overview of the data conversion process for data stored in the SAN storage area GS.

In FIG. 11, arrow A indicates conceptually the data conversion process in a read operation of data stored in the SAN storage area GS on the first computer 40 described previously. In this case, it is the first computer 40 that recognizes the file data. Arrow B indicates conceptually the data conversion process for a backup process and data migration process of data stored in the SAN storage area GS. In this case, it is the second controller 200 of the storage system 10 that recognizes the file data. In order to realize the data conversion process indicated by arrow B, the second controller 200 has a function of identifying the type of file system program 422, logical volume management program 423, and partition management program 424 used in the data conversion process on the first computer 40. This identification of type is executed by the type identification module 226 mentioned previously. The second controller 200 is furnished with a function of selecting modules having the same type as the identified type of programs of the first computer 40, from among several types of module groups 2272, 2273, 2274 in the data conversion module 227. Module selection is executed by the module selection module 2271 mentioned earlier. Using the selected modules, the data conversion module 227 executes the data conversion process on block data targeted for processing stored in the SAN storage area GS, to acquire file data. By so doing, the storage system 10 in isolation can recognize data in file units, wherein the data stored in the SAN storage area GS, without transferring the block data to the first computer 40. As will be apparent from the description above, the 'file system' in the claims is equivalent to the 'file system program 422' and 'file system module 2272' in the embodiment, and the 'first storage area partition management module' in the claims is equivalent to the 'partition management program 424' and the 'partition management module 2274' in the embodiment, and the 'second storage area partition management module' in the claims is equivalent to the 'logical volume management program 423' and the 'logical volume management module 2273' in the embodiment. The first storage area in the claims is equivalent to the 'SAN storage area GS' in the embodiment, and the 'third storage area' in the claims is equivalent to the 'NAS storage area GN' in the embodiment. Hereinbelow, the data conversion process indicated by arrow B will be described in greater detail, by way of a specific example of the backup process for backing up data in file units, wherein the data has been stored in the SAN storage area GS.

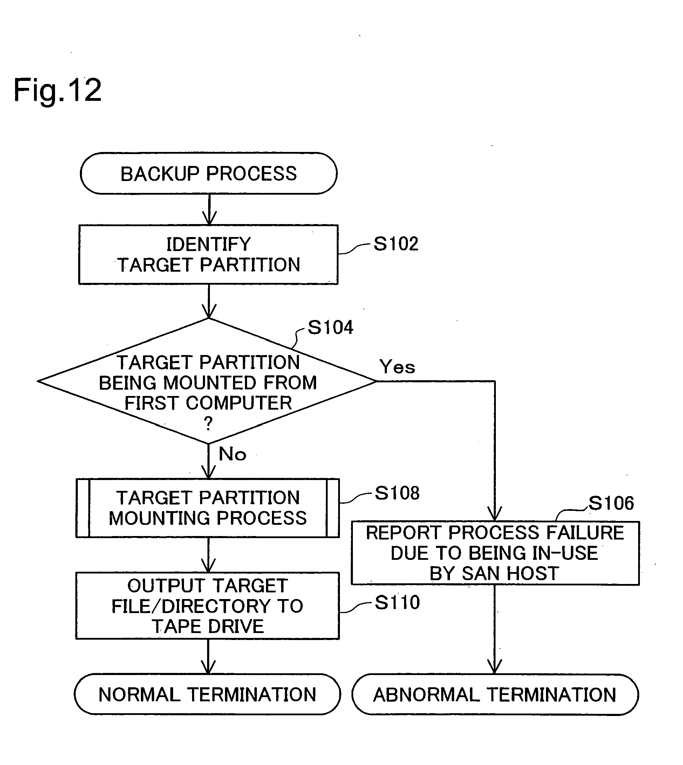

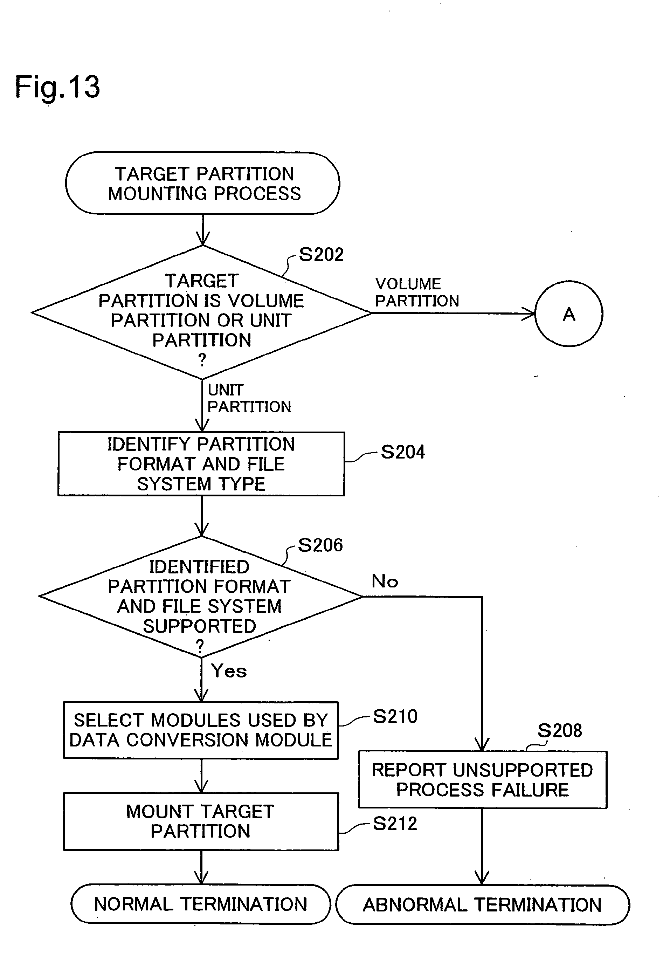

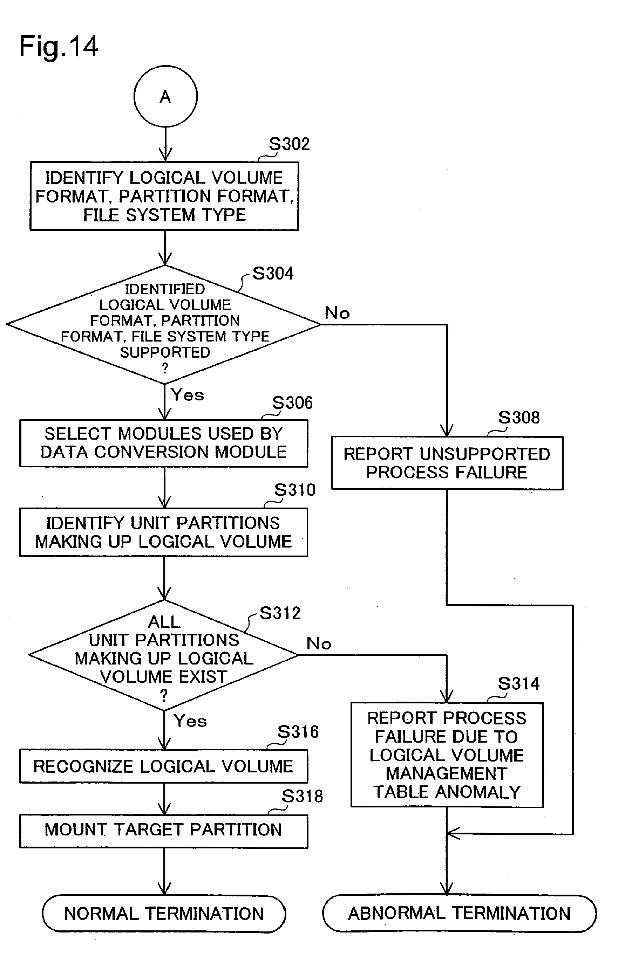

The following description of the backup process pertaining to the embodiment makes reference to FIGS. 12-14. FIG. 12 is a flowchart showing the processing routine of the backup process. FIGS. 13 and 14 are flowcharts showing the processing routine of the mounting process for a partition targeted for processing. Hereinbelow, the partition targeted for processing will be referred to as the target partition.

The backup process is a process executed by the second controller 200 (CPU 210) using the backup module 228 and the data conversion module 227. The backup process is initiated when a backup execution request is sent by the administrative computer 60 to the second controller 200. When the backup process is initiated, the second controller 200 acquires information identifying a target partition sent together with the backup execution request by the administrative computer 60, and identifies the target partition to be backed up (Step S102). Where the target partition is a unit partition described earlier, the acquired information includes logical unit number and unit partition number. Where the target partition is a volume partition described earlier, the acquired information includes logical volume number and volume partition number.

The second controller 200 determines whether the identified target partition is mounted in the first computer 40 (Step S104). A "target partition is mounted in the first computer 40" means that the target partition is connected software-wise to the first computer 40 in such a way as to be accessible by the first computer 40. Specifically, where the OS installed on the second controller is UNIX (registered trademark) or Windows (registered trademark), this determination can be carried out by specifying the network address of the first computer 40, issuing a ping command, and verifying response. If the second controller 200 determines that the target partition is mounted in the first computer 40 (Step S104: YES), second controller 200 notifies the administrative computer 60 that the backup process has failed (Step S106), and terminates the routine. On the other hand, if the second controller 200 determines that the target partition is not mounted in the first computer 40 (Step S104: NO), second controller 200 executes a process to mount the target partition on the second controller (hereinafter termed mounting process) (Step S108).

When the mounting process commences, the second controller 200 determines whether the target partition is a unit partition or a volume partition (Step S202). First, the process that takes place when the target partition is a unit partition will be described.

If the second controller 200 determines that the target partition is a unit partition, second controller 200 refers to the logical unit management table 321 mentioned previously, to identify the type of the partition format of the target partition and the type of the file system managing the target partition (Step S204). Specifically, the second controller 200 identifies the type of partition management program 424 and file system program 422 used on the first computer 40 that configured the target partition. In the event that the first controller 100 manages the logical unit management table 321, the second controller 200 communicates with the first controller 100 in order to acquire the information stored in the logical unit management table 321. Any of the following methods can be employed as the communication method between the second controller 200 and the first controller 100.
1) communication using SCSI inquiry command request/response
2) communication via a SCSI command device (virtual logical unit used as a SCSI command input/output destination)
3) communication method via shared memory (the shared memory may be furnished to the bridge 180, for example)
4) communication via the administrative LAN 82

On the other hand, in the event that the second controller 200 manages the logical unit management table 321, the second controller 200 acquires the required information by reading the logical unit management table 321 from the storage device 300.

The second controller 200 determines whether the identified types of partition format and file system are supported (Step S206). Specifically, where the data conversion module 227 of the second controller 200 includes modules of the same type as the identified types of the partition format and the file system, the second controller 200 determines that the identified types of partition format and file system type are supported.

If the second controller 200 determines that the identified types of the partition format and the file system are not supported (Step S206: NO), the second controller 200 notifies the administrative computer 60 that the backup process has failed due to being unsupported (Step S208), and terminates the routine.

If the second controller 200 determines that the identified types of the partition format and the file system are supported (Step S206: YES), the second controller 200 selects a file system module 2272 and partition management module 2274 of the same type as the identified type (Step S210). Specifically, from among the multiple types of file system module 2272 and partition management module 2274 mounted as loadable modules of the OS (e.g. UNIX) installed on the second controller 200, the second controller 200 loads modules of the types identified in Step S210, and gives the modules useable status.

Next, the second controller 200 mounts the target partition, enabling the second controller 200 to access the target partition (Step S212). As a result, the second controller 200, using the file system module 2272 and partition management module 2274 selected in Step S206, can recognize, in file units, block data stored in the SAN storage area GS of the storage device 300 corresponding to the target partition. As will be apparent from the preceding description, conversion of the block data to file data indicates converting data stored as block data identifiable in block units, so that can be recognized as file data identifiable in file units.

Next, the process which takes place in the event that the target partition is a volume partition will be described with reference to FIG. 14. If the second controller 200 determines that the target partition is a volume partition, the second controller 200 refers to the logical volume management table 322 (FIG. 10) and logical unit management table 321 (FIG. 9) mentioned previously, to identify the type of the logical volume format of the target partition, the type of the file system managing the target partition, and the type of the partition format of unit partitions making up the logical volume on the target partition is configured (Step S302). Specifically, the second controller 200 identifies the types of logical volume management program 423 and file system program 422, and partition management program 424 used on the first computer 40 which configured the target partition. The method for referring to each table 321, 322 is the same as the method of referring to the logical unit management table 321 in Step S204 described previously.

The second controller 200 determines whether the types of the identified logical volume format, partition format, and file system are supported (Step S304). Specifically, where the data conversion module 227 of the second controller 200 includes modules of the same type as the identified types, the second controller 200 determines that they are supported. If the second controller 200 determines that they are not supported (Step S304: NO), the second controller 200 notifies the administrative computer 60 that the backup process has failed due to being unsupported (Step S306), and terminates the routine. If the second controller 200 determines that they are supported (Step S304: YES), the second controller 200 selects modules of the same type as the identified type (Step S308).

Next, the second controller 200 refers to the first sub-table 322b of the logical volume management table 322, and identifies the unit partitions making up the logical volume on which the target partition is configured (Step S310). Using the partition management module 2274 selected in Step S308, the second controller 200 then recognizes the unit partitions configured by the first computer 40, and determines whether all of the identified unit partitions exist (Step S312). If the second controller 200 determines that not all of the identified unit partitions exist (Step S312: NO), the second controller 200 notifies the administrative computer 60 that the backup process has failed due to an anomaly of the logical unit management table 321 (Step S314), and terminates the routine.

If the second controller 200 determines that all of the identified unit partitions exist (Step S312: YES), using the logical volume management module 2273 selected in Step S308, the second controller 200 recognizes the logical volume on which the target partition is configured (Step S316).

The second controller 200 then mounts the target partition, enabling the second controller to access the target partition (Step S318). As a result, the second controller 200, using the modules selected in Step S206, can recognize, as file data in file units, the block data stored in the SAN storage area GS of the storage device corresponding to the target partition.

Returning to FIG. 12, when the target partition mounting process is completed, the second controller 200 takes the back-up-target file and directory present in the target partition and outputs them to the tape device 70 to create file unit backup data (Step S110). File unit backup data refers to backup data stored in a format accessible in file units by the second controller 200 .

As described hereinabove, in the storage system 10 pertaining to the embodiment, the block data stored in the SAN storage area GS can be recognized by the storage system 10 by itself, as file data identified in file units. Accordingly, file unit backup data can be created without using any of the resources of the first computer 40, that is, this backup process does not place a load on the first computer 40 and the network (SAN 81) for connection to the first computer 40. In the event that, for example, the first computer 40 is halted, file unit backup data can nevertheless be created.

As a result, both data stored in the SAN storage area GS and data stored in the NAS storage area GN can be managed in integrated fashion in file units, on the storage system 10 in isolation.

### B. Variations

### B-1. Variation 1

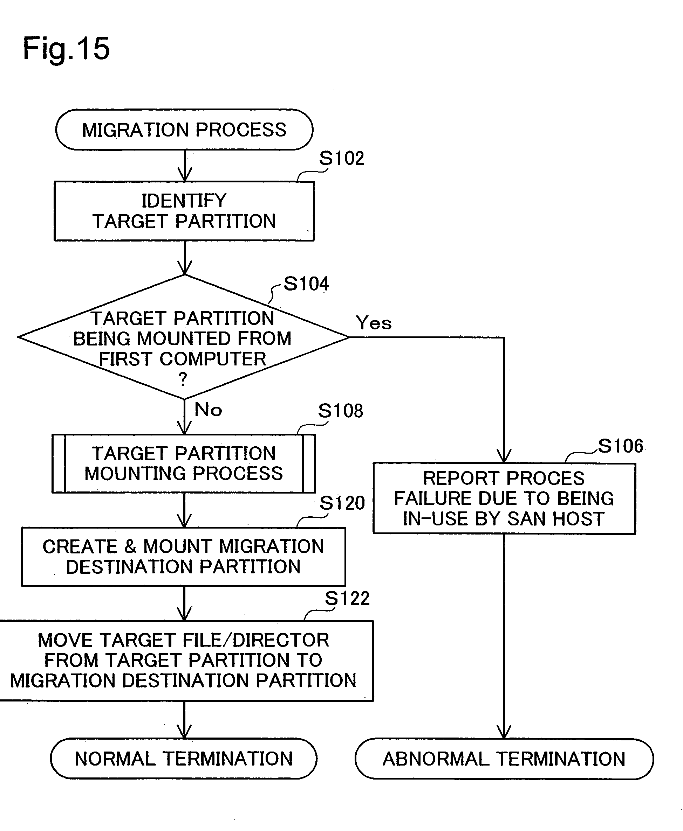

In addition to the backup process in the embodiment, the storage system 10 may also execute a migration process to migrate data stored in the SAN storage area GS to the NAS storage area GN on the storage system 10 in isolation. The following description of the migration process of Variation 1 makes reference to FIG. 15. FIG. 15 is a flowchart showing the processing routine of the migration process in Variation 1.

The migration process is executed by the second controller 200 using the data migration module 229 and the data conversion module 227. The migration process is executed when a migration execution request from the administrative computer 60 is sent to the second controller 200. As shown in FIG. 15, Steps S102 -S108 of the migration process are identical to the steps of the backup process described previously, so in FIG. 15 these steps are assigned the same symbols as in FIG. 12 and are not described. The difference of the migration process from the backup process is Steps S120 and S122 (FIG. 15) that are executed instead of Step S110 (FIG. 12) in the backup process. The following description pertains only to Steps S120 and S122 of the migration process.

In the migration process, when the target partition which is the migration source is mounted, the second controller 200 creates a partition as the migration destination, on a logical unit of the NAS storage area GN. The second controller 200 then mounts the created partition (Step S120). Specifically, the second controller 200, using any logical volume management module 2273 or partition management module 2274, creates a partition on the logical unit of the NAS storage area GN. The second controller 200 configures the dedicated file system module on the created partition so as to carry out management in file units. The second controller 200 then mounts the created partition and puts it in an accessible state.

Next, the second controller 200 moves the migration-target file and directory from the target partition to the created partition for migration destination (Step S122). Specifically, the second controller 200 reads the block data stored in the SAN storage area GS corresponding to the target partition and converts the read block data into file data identified in file units. The second controller 200, using the dedicated file system module, converts the converted file data into block data. Using a logical volume management module 2273 or partition management module 2274, the second controller 200 then determines the address of the logical unit of the NAS storage area GN corresponding to the migration destination partition. Via the first controller 100, the second controller 200 stores the block data in the determined logical block address.

As described hereinabove, according to the migration process in this Variation, the storage system 10 in isolation can move data from the SAN storage area GS to the NAS storage area GN, without using the resources of the first computer 40. The second controller 200 can manage the migrated data in file units, using the dedicated file system module.

It would also be acceptable for the second controller 200 to manage data stored in the SAN storage area GS as-is, using the selected file system module 2272, logical volume management module 2273 and partition management module 2274. That is, target partition is shifted from belonging to the SAN storage area GS to belonging to the NAS storage area GN. This way has the advantage that the down time associated with data migration can be reduced.

### B-2. Variation 2

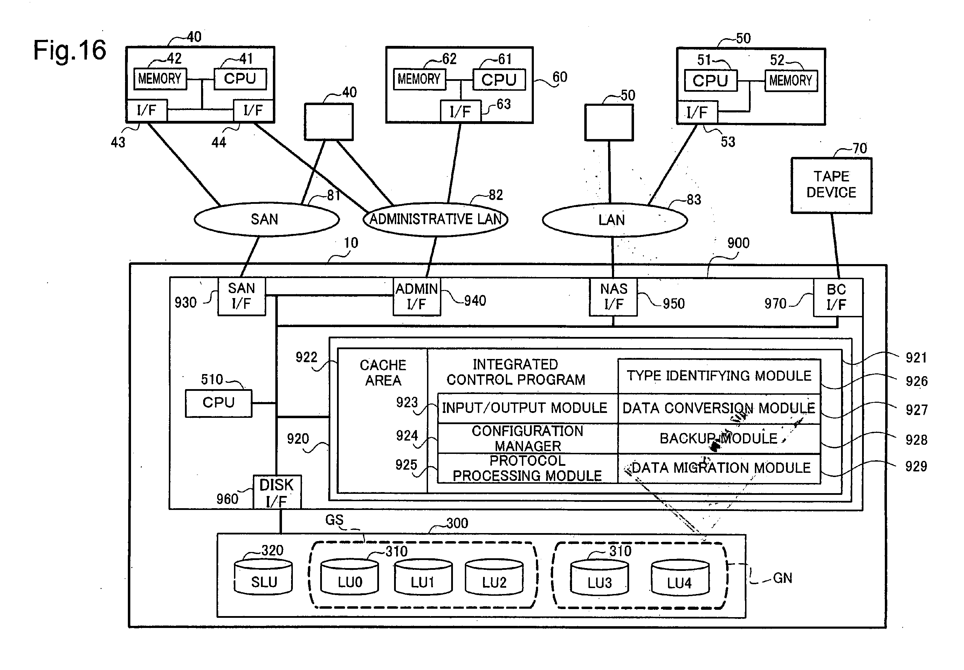

The storage system 10 in Variation 2 will be described with reference to FIG. 16. FIG. 16 is a schematic of arrangement of the computer system in Variation 2. As shown in FIG. 16, the integrated controller 900 of the storage system 10 in Variation 2 is furnished will all of the functions of the first controller 100 and the second controller 200 in the embodiment. That is, the integrated controller 900 includes I/F 930, 940, 950, 960, 970 corresponding to some types of I/F provided to the first controller 100 in the embodiment (i.e. the SAN I/F 130, DISK I/F 160, and ADMIN I/F 140) and some types of I/F provided to the second controller 200 (i.e. the NAS I/F 250, ADMIN I/F 240, and BC I/F 270). Additionally, the memory 920 of the integrated controller 900 stores an integrated control program 921 that integrates the functions of the first control program 121 and the second control program 221 of the embodiment. The integrated control program 921 has functional modules 923 -929 corresponding to the functional modules of the first control program 121 (the input/output module 123 and configuration manager 124) and the functional modules of the second control program 221 (the protocol processing module 225, type identification module 226, data conversion module 227, backup module 228, and data migration module 229). In this case, advantages and working effects similar to the embodiment may be realized with a simpler arrangement than the embodiment.

### B-3. Other Variations

The logical unit management table 321 and the logical volume management table 322 may be stored in the administrative computer 60. In this case, the administrative computer 60, when issuing a backup or migration execution request to the storage system 10, will refer to the logical unit management table 321 and the logical volume management table 322. The administrative computer 60 then notifies the storage system 10 of the type information required for backup or migration.

Whereas in the embodiment the administrative computer 60 is an independent computer, a storage management program 621 may be stored in the first computer 40 or second computer 50, to have the first computer 40 or second computer 50 assume the functions of the administrative computer 60. Where the storage management program 621 is stored in the first computer 40, when a new logical volume or file system is configured in the first computer 40, the logical unit management table 321 and logical volume management table 322 may be updated automatically. By so doing, the burden on the user of having to operate the administrative computer 60 in order to configure and update the logical unit management table 321 and logical volume management table 322 can be reduced.

In the backup process in the embodiment, in the event that the first computer 40 has mounted the target partition, the second controller 200 suspends the backup process. Instead of this, in the event that the first computer 40 has mounted the target partition, the second controller 200 may carry out the backup process using a so-called "snapshot" function. Specifically, the second controller 200 uses the snapshot function to create a virtual copy of the target partition, and executes backup of data stored in the created virtual copy of the target partition.

In the embodiment, the storage system 10 is so-called SAN/NAS hybrid storage, but some other storage system would be acceptable as well. For example, in a mixed computer system includes IP network connection type SAN storage (IP-SAN), NAS storage, a first computer 40, and a second computer 50 on a single IP network, the SAN storage (IP-SAN) controller may be provided with the aforementioned type identification module 226, data conversion module 227, and backup module 228. By so doing, SAN storage data and NAS storage data may be managed in integrated fashion in file units in the computer system.

While the computer system, storage system, the administrative computer, and the control method of these system and computer pertaining to aspects of the invention have been shown and described on the basis of the embodiment and variation, the embodiments of the invention described herein are merely intended to facilitate understanding of the invention, and implies no limitation thereof. Various modifications and improvements of the invention are possible without departing from the spirit and scope thereof as recited in the appended claims, and these will naturally be included as equivalents in the invention.

## Claims

1. A storage system connected to a first computer, wherein the first computer has a file system to convert between file data and block data, wherein the file data is identified in file units, wherein the block data is identified in block units, the storage system comprising:
a first interface for sending and receiving the block data with the first computer;
a storage device having a first storage area for storing the block data,
wherein the block data is sent and received via the first interface;
a type identification module that identifies the type of the file system that is available in the first computer; and
a data conversion module that acquires the block data stored in the first storage area, wherein the data conversion module executes a conversion process to convert the acquired block data into the file data according to the identified type of the file system.

2. A storage system according to Claim 1,
wherein the data conversion module includes:
a plurality of different types of the file system; and
a selection module that selects from among the plurality of the file systems a file system of a type identified by the type identification module,
and wherein the data conversion module executes the conversion process using the selected file system.

3. A storage system according to Claim 1 or Claim 2,
wherein the storage system in advance stores first type information for identifying the type of the file system that is available in the first computer,
and wherein the type identification module refers to the first type information to identify the type of the file system.

4. A storage system according to Claim 2, or Claim 3 as dependent on Claim 2,
wherein the first computer has, in addition to the file system, a first storage area management module that divides the first storage area to configure a plurality of first divided storage areas,
wherein the type identification module identifies, in addition to the type of the file system, a type of the first storage area management module that is available in the first computer,
wherein the data conversion module has, in addition to the plurality of different types of the file system, plurality of different types of the first storage area management module,
wherein the selection module selects, in addition to the file system, a first storage area management module of the type identified by the type identification module, from among the plurality of the first storage area management modules,
and wherein the data conversion module executes the conversion process using the selected file system and the selected first storage area management module.

5. A storage system according to Claim 4,
wherein the storage system in advance stores second type information for identifying type of the first storage area management module that is available in the first computer,
and wherein the type identification module refers to the second type information to identify the type of the first storage area management module.

6. A storage system according to Claim 4 or Claim 5,
wherein the first computer has a second storage area management module in addition to the file system and the first storage area management modules, wherein the second storage area management module configures a second storage area or second divided storage areas, wherein the second storage area is configured using the plurality of the first divided storage areas, wherein the second divided storage areas are configured by dividing the configured second storage area,
wherein the type identification module identifies, in addition to the type of the file system and the type of the first storage area management module, a type of second storage area management module that is available in the first computer,
wherein the data conversion module has, in addition to the plurality of different types of the file system and the plurality of different types of the first storage area management module, a plurality of different types of the second storage area management module,
wherein the selection module selects, in addition to the file system and the first storage area management module, the second storage area management module of a type identified by the type identification module, from among the plurality of the second storage area management modules,
and wherein the data conversion module executes the conversion process using the selected file system, the selected first storage area management module, and the selected second storage area management module.

7. A storage system according to Claim 6,
wherein the storage system in advance stores third type information for identifying the type of the second storage area management module that is available in the first computer,
and wherein the type identification module refers to the third type information to identify the type of the second storage area management module.

8. A storage system according to Claim 6 or Claim 7 further comprising
a type management table, wherein the type management table includes arrangement information and information of each type of the file system, the first storage area management module, and the second storage area management module that are available in the first computer, wherein the arrangement information represents arrangement of the first divided storage areas, the second divided storage areas, and the second storage area respectively configured in the first computer, wherein the information of each type is associated with the arrangement information.

9. A storage system according to any one of Claims 1 to 8 further comprising:
a connecter for connecting to an external storage for storing backup data; and
a backup module that backs up the file data to the external storage, wherein the file data is obtained by means of the conversion process.

10. A storage system according to any one of Claims 1 to 9 further comprising
a second interface for sending and receiving the file data with a second computer,
wherein the data conversion module further executes conversion between the block data and the file data, the file data being sent and received via the second interface,
and wherein the storage device additionally has a third storage area for storing the block data, wherein the block data is obtained by the conversion of the file data by the data conversion module.

11. A storage system according to Claim 10 further comprising
a data migration module that migrates the file data obtained by the conversion process from the first storage area to the third storage area.

12. A storage system according to Claim 10 or Claim 11,
wherein the data conversion module additionally has a dedicated file system specific to the storage system,
and wherein the block data stored in the third storage area is the block data converted using the dedicated file system.

13. A storage system according to any one of Claims 10 to 12,
wherein the first storage area in the storage device is capable of being shifted to the third storage area,
wherein the second computer is made possible to access a partial storage area via the data conversion module and the second interface, wherein the partial storage area is a area constituting at least part of the first storage area stored the block data via the first interface,
and wherein the partial area is shifted from the first storage area to the third storage area.

14. An administrative computer for administering a storage system, wherein the storage system has a first interface and a storage device, wherein the first interface sends and receives block data, the block data being identified in block units, wherein the storage device has a first storage area for storing the block data that is sent and received via the first interface, the administrative computer comprising:
a type reporting module that reports to the storage system a type of file system in a first computer connected to the storage system, wherein the file system executes conversion between the block data and file data, the block data having been stored in the first storage area, the file data being identified in file units.

15. An administrative computer according to Claim 14, wherein
the type reporting module additionally reports to the storage system a type of first storage area management module in the first computer, wherein the first storage area management module divides the first storage area to configure a plurality of first divided storage areas.

16. An administrative computer according to Claim 15, wherein
the type reporting module additionally reports to the storage system a type of second storage area management module in the first computer, wherein the second storage area management module configures a second storage area or second divided storage areas, wherein the second storage area is configured using the plurality of the first divided storage areas, wherein the second divided storage areas are configured by dividing the configured second storage area.

17. An administrative computer according to Claim 16, wherein
the type reporting module includes a type information configuration module for storing in the storage system a type of the file system, a type of the first storage area management module, and a type of the second storage area management module associated with information representing the arrangement of the first divided storage areas, the second divided storage areas, and the second storage area configured in the first computer.

18. A computer program product for managing a storage system connected to a first computer, wherein the first computer has a file system to convert between file data and block data, wherein the file data is identified in file units, wherein the block data is identified in block units, wherein the storage system has a first storage area for storing the block data received from the first computer, the computer program product comprising:
a computer-readable medium; and
a computer program stored on the computer-readable medium, the computer program comprising:
a program instruction for identifying a type of the file system that is available in the first computer;
a program instruction for selecting the file system of the identified type from among a plurality of the file systems; and
a program instruction for executing conversion of the block data into the file data using the selected file system, wherein the block data is acquired from the first storage area.

19. A storage system providing a first storage area to a first computer, wherein the first computer has a file system, a first storage area management module and a second storage area management module, wherein the file system executes conversion between file data and block data, wherein the file data is identified in file units, wherein the block data is identified in block units, wherein the first storage area management module divides the first storage area storing the block data into a plurality of first divided storage areas, wherein the second storage area management module configures a second storage area or second divided storage areas, wherein the second storage area is configured using the plurality of the first divided storage areas, wherein the second divided storage areas are configured by dividing the configured second storage area, the storage system comprising:
a first interface for sending and receiving the block data with the first computer;
a storage device having the first storage area;
a type management table that includes arrangement information and information of each type of the file system, the first storage area management module, and the second storage area management module that are available in the first computer, wherein the arrangement information represents arrangement of the first divided storage areas, the second divided storage areas, and the second storage area respectively configured in the first computer, wherein the information of each type is associated with the arrangement information;
a type identification module that identifies the each type of the file system, the first storage area management module, and the second storage area management module that are available in the first computer with reference to the type management table;
a plurality of different types of the file system;
a plurality of different types of the first storage area management module;
a plurality of different types of the second storage area management module;
a selection module that selects the identified type of the file system from among the plurality of the file systems, wherein the selection module additionally selects the identified type of the first storage area management module from among the plurality of the first storage area management modules, wherein the selection module additionally selects the identified type of the second storage area management module from among the plurality of the second storage area management modules; and
a data conversion module that acquires the block data stored in the first storage area, wherein the data conversion module converts the acquired block data into the file data using the selected file system, the selected first storage area management module, and the selected second storage area management module.
